# EUROPEAN PATENT APPLICATION

(11) **EP 4 210 202 A1**
(43) Date of publication of application: **12.07.2023**
(21) Application number: 21877427.1
(22) Date of filing: 28.09.2021
(51) Int. Cl.: H02K 3/34, H02K 15/04, H02K 15/12

(54) **COIL AND STATOR MANUFACTURING METHOD**

(30) Priority: 07.10.2020 JP 2020170168; 15.12.2020 JP 2020207985
(71) Applicant: AISIN CORPORATION, Kariya-shi, Aichi 448-8650 (JP)
(72) Inventor: ISHIKAWA, Masahiro, Kariya-shi, Aichi 448-8650 (JP); YABUI, Hiroaki, Kariya-shi, Aichi 448-8650 (JP); SATO, Koji, Kariya-shi, Aichi 448-8650 (JP); HOSHINO, Akinori, Kariya-shi, Aichi 448-8650 (JP)
(74) Representative: Kramer Barske Schmidtchen Patentanwälte PartG mbB
(86) International application number: PCT/JP2021/035731
(87) International publication number: WO 2022/075126

(57) **Abstract**

This method for manufacturing a coil includes a cross section forming step for transforming an outer shape of a part to be housed in a slot in a coil wire that has a circular cross section and is not subjected to an insulation coating process, and an insulation step for performing, after the cross section forming step, the insulation coating process on the coil wire after cross section forming.

## Description

### TECHNICAL FIELD

The present invention relates to methods for manufacturing a coil and a stator.

### BACKGROUND ART

Hitherto, there is known a coil manufacturing method in which a cross section of a coil wire is formed. Such a stator is disclosed, for example, in Japanese Unexamined Patent Application Publication No. 2020-36427 (JP 2020-36427 A).

JP 2020-36427 A discloses a method for manufacturing a segment coil (coil) to be disposed in a stator. In the method for manufacturing the segment coil described in JP 2020-36427 A, a linear coil (coil wire) having an insulation coating formed in advance is subjected to a cross section forming step for forming (transforming) a cross section by using a press jig or a reduction roll so that individual parts of the coil wire have different sectional shapes. Specifically, the insulation coating formed on a part bent into a relatively complicated shape after the cross section forming to serve as a coil end portion is likely to deteriorate. To suppress a decrease in the thickness of the insulation coating formed on the part serving as the coil end portion, the cross section is formed so that the amount of transformation of the part serving as the coil end portion during the cross section forming is smaller than that of a part serving as a slot housing portion. In other words, in the method for manufacturing the segment coil described in JP 2020-36427 A, the cross section is formed so that the amount of transformation of the part serving as the slot housing portion during the cross section forming is relatively large. In this case, the insulation coating formed on the part serving as the slot housing portion becomes relatively thin (thinned) after the cross section forming.

### Related Art Documents

### Patent Documents

Patent Document 1: Japanese Unexamined Patent Application Publication No. 2020-36427 (JP 2020-36427 A)

### SUMMARY OF THE INVENTION

### Problem to be Solved by the Invention

In the method for manufacturing the segment coil described in JP 2020-36427 A, however, the insulation coating formed on the part serving as the slot housing portion becomes relatively thin (thinned) after the cross section forming. Therefore, it may be necessary to use a linear coil having a relatively thick insulation coating formed in advance in consideration of variation in the amount of transformation during the cross section forming. Thus, the part of the linear coil that serves as the slot housing portion after the cross section forming may be formed so that the thickness of the insulation coating is larger than necessary as compared to a thickness that can secure the insulation property of the slot housing portion. In this case, the occupation ratio of the insulation coating in a slot increases because the thickness of the insulation coating is larger than necessary. Therefore, the space factor of the slot housing portion in the slot decreases. In view of this, there is a demand for methods for manufacturing a coil and a stator that can improve the space factor of the slot housing portion in the slot.

The present invention has been made to solve the above problem, and one object of the present invention is to provide methods for manufacturing a coil and a stator that can improve the space factor of the slot housing portion in the slot while improving the insulation property of the coil end portion.

### Means for Solving the Problem

In order to achieve the above object, a method for manufacturing a coil according to a first aspect of the present invention is a method for manufacturing a coil to be disposed in a stator including slots. The method includes a bending step for bending a coil wire that is not subjected to an insulation coating process so that the coil wire is disposed in the stator, a cross section forming step for transforming an outer shape of a part to be housed in the slot in the coil wire that has a circular cross section and is not subjected to the insulation coating process, and an insulation step for performing, after the bending step and the cross section forming step, the insulation coating process on the coil wire after bending and cross section forming.

As described above, the method for manufacturing the coil according to the first aspect of the present invention includes the cross section forming step for transforming the outer shape of the part to be housed in the slot in the coil wire that is not subjected to the insulation coating process. As a result, the outer shape of the part of the coil wire that serves as the slot housing portion can be transformed into a desired shape for the disposition in the slot. As described above, the method for manufacturing the coil according to the first aspect includes the insulation step for performing, after the cross section forming step, the insulation coating process on the coil wire after the cross section forming. Accordingly, unlike a case where the insulation coating is formed on the coil wire in advance, there is no need to consider the thinning of the insulation coating in the cross section forming step. Thus, the thickness of the insulation coating need not be increased more than necessary. That is, the insulation coating process can be performed so that the insulation coating has an optimum thickness (minimum thickness that can secure the insulation property of the coil) for the part of the coil wire that serves as the slot housing portion with the outside diameter transformed into the desired shape for the disposition in the slot in the cross section forming step. Therefore, the thickness of the insulation coating does not increase more than necessary. Thus, an increase in the occupation ratio of the insulation coating in the slot can be prevented. As a result, the space factor of the slot housing portion in the slot can be improved. As described above, the method for manufacturing the coil according to the first aspect includes the insulation step for performing, after the bending step, the insulation coating process on the coil wire after the bending. Accordingly, unlike a case where the coil wire having the insulation coating formed in advance is bent at the part that serves as the coil end portion, the insulation coating does not deteriorate. Thus, the insulation property of the coil end portion can be improved. As a result, it is possible to improve the space factor of the slot housing portion in the slot while improving the insulation property of the coil end portion.

In order to achieve the above object, a method for manufacturing a stator according to a second aspect of the present invention is a method for manufacturing a stator including a stator core including slots and a coil disposed in the stator. The method includes a bending step for bending a coil wire that is not subjected to an insulation coating process so that the coil wire is disposed in the stator core, a cross section forming step for forming a cross section of the coil wire that has a circular cross section and is not subjected to the insulation coating process so that an outer shape of a part to face inner side surfaces of the slot conforms to the inner side surfaces of the slot, an insulation step for performing, after the bending step and the cross section forming step, the insulation coating process on the coil wire after bending and cross section forming, and a disposing step for disposing, after the insulation step, in the stator core, the coil formed from the coil wire after the bending, the cross section forming, and the insulation coating process.

As described above, the method for manufacturing the stator according to the second aspect of the present invention includes the cross section forming step and the insulation step similar to those of the method for manufacturing the coil according to the first aspect. Thus, the increase in the occupation ratio of the insulation coating in the slot can be prevented as in the method for manufacturing the coil according to the first aspect. As described above, the method for manufacturing the stator according to the second aspect includes the coil disposing step for disposing, in the stator core, the coil formed from the coil wire after the cross section forming and the insulation coating process. Thus, it is possible to dispose, in the stator core, the coil formed from the coil wire that can prevent the increase in the occupation ratio of the insulation coating in the slot. As a result, the space factor of the slot housing portion in the slot can be improved as in the method for manufacturing the coil according to the first aspect. As described above, the method for manufacturing the stator according to the second aspect includes the bending step and the insulation step similar to those of the method for manufacturing the coil according to the first aspect. Thus, the insulation property of the coil end portion can be improved as in the method for manufacturing the coil according to the first aspect.

### Effects of the Invention

According to the present invention, as described above, it is possible to provide the methods for manufacturing the coil and the stator that can improve the space factor of the slot housing portion in the slot and improve the insulation property of the coil end portion.

### BRIEF DESCRIPTION OF THE DRAWINGS

[FIG. 1] FIG. 1 is a plan view showing the configuration of a rotary electric machine according to a first embodiment.
[FIG. 2] FIG. 2 is a perspective view of a stator according to the first embodiment when viewed from a radially inner side.
[FIG. 3] FIG. 3 is a plan view showing the configuration of slot housing portions of the stator according to the first embodiment.
[FIG. 4] FIG. 4 is a perspective view showing the configuration of a segment conductor of the stator according to the first embodiment.
[FIG. 5] FIG. 5 is a plan view showing the configuration of the sectional shape of the segment conductor of the stator according to the first embodiment (FIG. 5A is a sectional view (taken along a line 500-500 in FIG. 4) of one slot housing portion, FIG. 5B is a sectional view (taken along a line 600-600 in FIG. 4) of the other slot housing portion, and FIG. 5C is a sectional view (taken along a line 700-700 in FIG. 4) of a coil end portion).
[FIG. 6] FIG. 6 is a partially enlarged sectional view showing the configuration of the coil end portions of the stator according to the first embodiment.
[FIG. 7] FIG. 7 is a flowchart showing a method for manufacturing the stator according to the first embodiment.
[FIG. 8] FIG. 8 is a flowchart showing a method for manufacturing the stator according to a second embodiment.
[FIG. 9] FIG. 9 is a plan view showing the configuration of slot housing portions of a stator according to a first modification of the first embodiment.
[FIG. 10] FIG. 10 is a plan view showing the configuration of slot housing portions of a stator according to a second modification of the first embodiment.
[FIG. 11] FIG. 11 is a flowchart showing a method for manufacturing the stator according to a third modification of the first embodiment.
[FIG. 12] FIG. 12 is a flowchart showing a method for manufacturing the stator according to a fourth modification of the first embodiment.

### MODES FOR CARRYING OUT THE INVENTION

Hereinafter, embodiments of the present invention will be described with reference to the drawings.

### [First Embodiment]

### (Configuration of Stator)

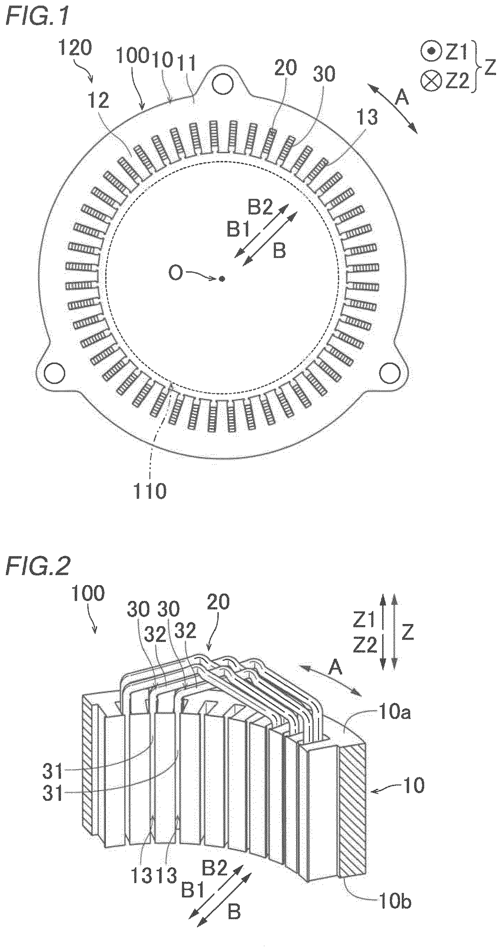

First, the configuration of a stator 100 according to a first embodiment will be described with reference to FIGS. 1 to 6.

In the following description, an "axial direction" means a direction (Z direction) along a rotational axis (symbol O) of a stator core 10 (see FIG. 1) provided in the stator 100. A "circumferential direction" means a circumferential direction (A direction) of the stator core 10. A "radial direction" means a radial direction (B direction) of the stator core 10. One side and the other side in the axial direction (Z direction) of the stator core 10 are defined as a Z1 side and a Z2 side, respectively. One side (radially inner side) and the other side (radially outer side) in the radial direction (B direction) of the stator core 10 are defined as a B1 side and a B2 side, respectively.

As shown in FIG. 1, the stator 100 together with a rotor 110 constitutes a rotary electric machine 120. For example, the rotary electric machine 120 is a motor, a generator, or a motor generator. The rotor 110 is disposed on the B1 side of the stator 100 such that the outer peripheral surface of the rotor 110 and the inner peripheral surface of the stator 100 face each other in the radial direction. That is, the stator 100 is structured as a part of the rotary electric machine 120 of an inner rotor type.

The stator 100 includes the stator core 10 and a coil 20. The stator core 10 has a cylindrical shape with its central axis being the central axis O along the Z direction. The stator core 10 is formed by stacking a plurality of electromagnetic steel sheets (for example, silicon steel sheets) in the Z direction.

The stator core 10 includes an annular back yoke 11, a plurality of teeth 12 protruding from the back yoke 11 to the B1 side, and a plurality of slots 13 formed between the teeth 12 adjacent to each other in the A direction. As shown in FIG. 2, the plurality of slots 13 is provided so as to extend in the axial direction of the stator core 10.

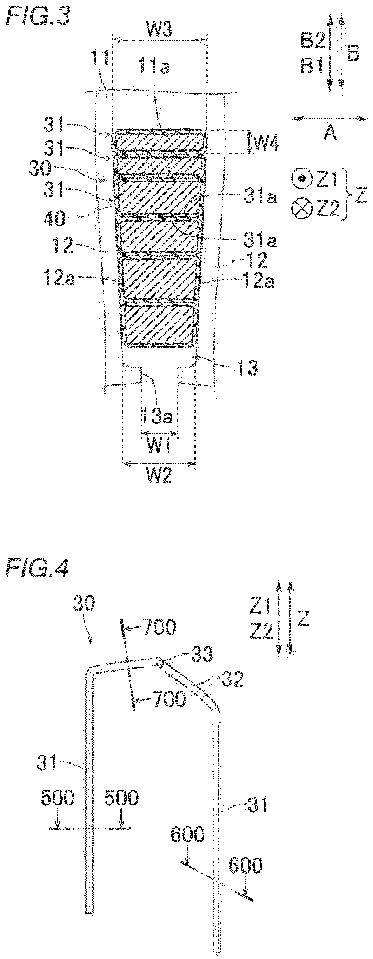

As shown in FIG. 1, the coil 20 includes a plurality of segment conductors 30. The plurality of segment conductors 30 is joined together. Specifically, the end of a slot housing portion 31 described later (see FIG. 4) in the segment conductor 30 disposed on the Z1 side and the end of a slot housing portion 31 in the segment conductor 30 disposed on the Z2 side are joined together in the slot 13. As shown in FIG. 3, the sectional shape of the segment conductor 30 (slot housing portions 31 and coil end portion 32) is a rectangular shape. That is, the segment conductor 30 is a rectangular conductor. The segment conductor 30 is made of copper. The segment conductor 30 may be made of aluminum.

As shown in FIG. 2, the plurality of segment conductors 30 is disposed across the plurality of slots 13. Specifically, each of the plurality of segment conductors 30 includes a pair of slot housing portions 31 (see FIG. 4) housed (inserted) in different slots 13. A plurality of slots 13 is provided between the slots 13 in which the pair of slot housing portions 31 is housed. Each of the plurality of segment conductors 30 includes a coil end portion 32 connected to the slot housing portions 31. That is, the coil end portion 32 connects the pair of slot housing portions 31. Thus, the segment conductor 30 has a substantial U-shape when viewed in the radial direction (see FIG. 4).

The coil end portions 32 are provided outside the stator core 10 in the axial direction. Specifically, the coil end portions 32 protrude from an end face 10a of the stator core 10 on the Z1 direction side in the axial direction and an end face 10b of the stator core 10 on the Z2 direction side in the axial direction.

As shown in FIG. 3, the slot 13 is a portion surrounded by a wall portion 11a of the back yoke 11 provided on the radially outer side and circumferential side surfaces 12a of two teeth 12. The slot 13 has an opening 13a that is open to the radially inner side. The slot 13 is also open to both sides in the axial direction. The wall portion 11a and the circumferential side surfaces 12a are examples of "inner side surfaces of the slot 13" in the claims.

The opening 13a has an opening width W1 in the circumferential direction. The opening width W1 is smaller than a circumferential width W2 of a part of the slot 13 where the coil 20 is disposed. That is, the slot 13 is structured as a semi-open slot. The width W2 of the slot 13 varies depending on radial positions. Specifically, the width W2 increases toward the radially outer side.

A plurality of (six in FIG. 3) slot housing portions 31 is arranged in the slot 13 in the radial direction. A circumferential width W3 of the slot housing portion 31 in the slot 13 is larger for the slot housing portion 31 on the radially outer side in conformity with the shape of the slot 13. The sectional areas of the slot housing portions 31 in the slot 13 are equal to each other. Therefore, a radial width W4 of the slot housing portion 31 in the slot 13 is smaller for the slot housing portion 31 on the radially outer side.

The segment conductor 30 is covered (coated) with an insulation coating 40 provided for insulation. The insulation coating 40 is made of an insulating material such as a thermosetting resin.

As shown in FIG. 4, the coil end portion 32 includes a crank part 33 having a crank shape that is bent stepwise for the width of one segment conductor 30 in the radial direction when viewed in the axial direction. That is, the radial width of the crank part 33 is twice the width of one segment conductor 30.

As a result, one and the other of the pair of slot housing portions 31 are disposed at different radial positions (lanes) (lanes are changed). For example, one of the pair of slot housing portions 31 is disposed in a first radially inner lane (innermost lane) of the slot 13, and the other of the pair of slot housing portions 31 is disposed in a second radially inner lane (second lane from the inner side) of the slot 13 that is different from the lane of the one of the pair of slot housing portions 31. In this manner, the segment conductor 30 (coil 20) is disposed in the stator core 10 such that one and the other of the pair of slot housing portions 31 are disposed in the lanes shifted from each other in the radial direction.

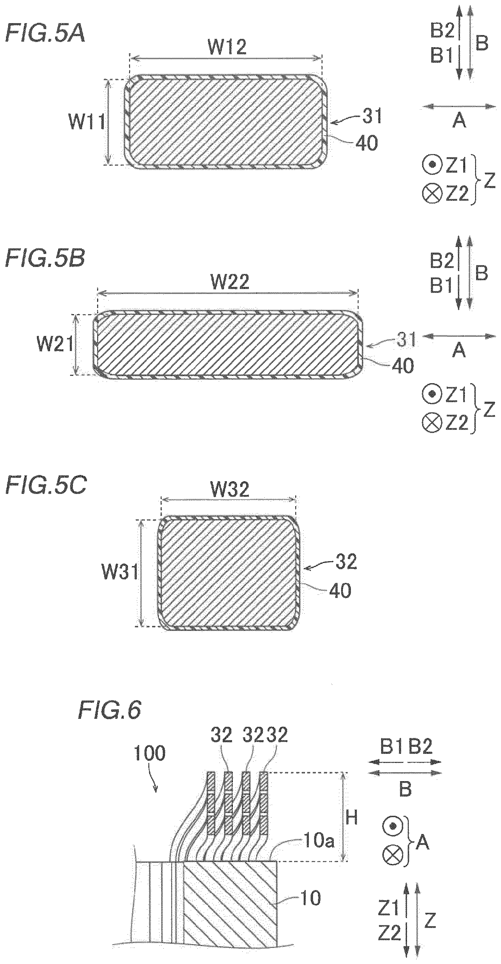

As shown in FIGS. 5A and 5B, the sectional shape of one of the pair of slot housing portions 31 and the sectional shape of the other of the pair of slot housing portions 31 are different from each other. As shown in FIG. 5A, the radial width of the cross section of one of the pair of slot housing portions 31 is W11. The circumferential width of the cross section of one of the pair of slot housing portions 31 is W12. As shown in FIG. 5B, the radial width of the cross section of the other of the pair of slot housing portions 31 is W21 different from W11. The circumferential width of the cross section of the other of the pair of slot housing portions 31 is W22 different from W12. In the example shown in FIGS. 5A and 5B, W21 is smaller than W11 and W22 is larger than W12. In this example, one of the pair of slot housing portions 31 (see FIG. 5A) is provided on the radially inner side of the other (see FIG. 5B).

As shown in FIGS. 5A to 5C, the sectional shapes of the pair of slot housing portions 31 and the sectional shape of the coil end portion 32 are different from each other. Specifically, as shown in FIG. 5C, the cross section of the coil end portion 32 has a rectangular shape including sides having a width W31 and sides having a width W32. The widths W31 and W32 are different from the widths W11, W12, W21, and W22. For example, the cross section of the coil end portion 32 has a square shape. That is, the widths W31 and W32 are substantially equal to each other in this case.

As shown in FIG. 6, heights H of the plurality of coil end portions 32 arranged in the radial direction from the end face 10a of the stator core 10 are substantially equal to each other.

### (Method for Manufacturing Stator)

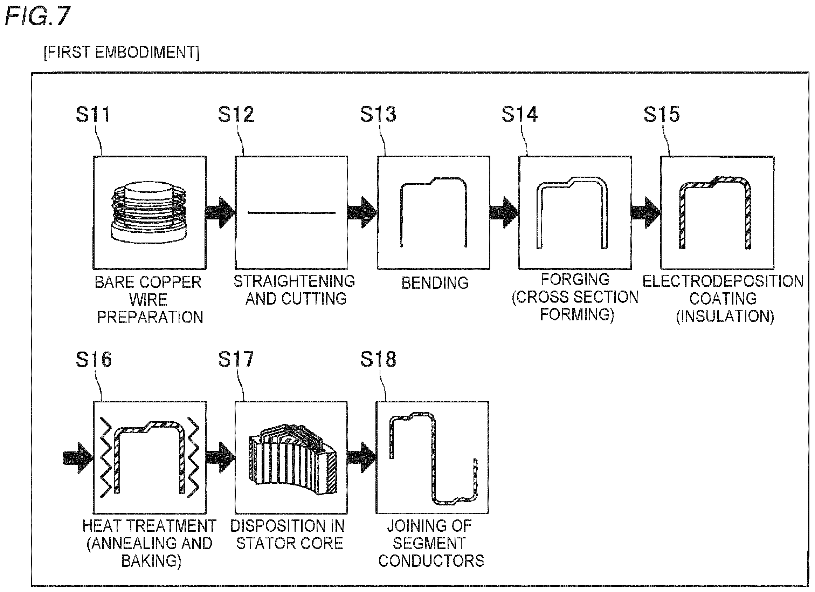

Next, a method for manufacturing the stator 100 will be described with reference to FIG. 7.

### <Preparation Step>

As shown in FIG. 7, a preparation step for a copper wire (bare copper wire having a substantially circular cross section and not subjected to an insulation coating process) to be used as the segment conductor 30 is first performed in step S11. In the preparation step (S11), the copper wire is prepared, for example, in a state in which it is wound around a bobbin (in a roll state). The copper wire is an example of a "coil wire" in the claims.

### <Straightening and Cutting Step>

Next, a straightening and cutting step for straightening and cutting the copper wire that is not subjected to the insulation coating process is performed in step S12. Specifically, the rolled copper wire is straightened in the straightening and cutting step (S12). Then, the straight copper wire is cut to the length of the segment conductor 30 (see FIG. 4).

### <Bending Step>

Next, a bending step for bending the copper wire (not subj ected to the insulation coating process) cut to the length of the segment conductor 30 so that the copper wire can be disposed in the stator 100 is performed in step S13. Specifically, in the bending step (S13), the copper wire cut to the length of the segment conductor 30 is bent by a jig into a shape (substantial U-shape with the crank part 33) (see FIG. 4) for the disposition in the stator core 10. That is, in the bending step (S13), a U-shape bending step for bending the copper wire cut to the length of the segment conductor 30 into the substantial U-shape and a lane change bending step for bending the copper wire cut to the length of the segment conductor 30 into the shape with the crank part 33 are performed in sequence. Either the U-shape bending step or the lane change bending step may be performed first.

### <Forging Step>

Next, a cross section forming step for forming the cross section of the copper wire (having the circular cross section and not subjected to the insulation coating process) cut to the length of the segment conductor 30 by compressing the copper wire cut to the length of the segment conductor 30 is performed in step S14. The cross section forming step (S14) is a step of transforming the outer shape of a part of the copper wire (having the circular cross section and not subjected to the insulation coating process) to be housed in the slot 13. Specifically, the cross section forming step (S14) is a step of forming the cross section of the copper wire (cut to the length of the segment conductor 30) so that the outer shape of a part to face the inner side surfaces of the slot 13 (the wall portion 11a of the back yoke 11 and the circumferential side surfaces 12a of two teeth 12) conforms to the inner side surfaces of the slot 13. Specifically, in the cross section forming step (S14), the cross section of the copper wire (cut to the length of the segment conductor 30) is formed so that, when the plurality of slot housing portions 31 is housed in the slot 13 so as to be arranged in the B direction (radial direction) as shown in FIG. 3, the parts close to the inner side surfaces of the slot 13 (the wall portion 11a of the back yoke 11 and the circumferential side surfaces 12a of two teeth 12) in the plurality of slot housing portions 31 arranged in the B direction face the inner side surfaces of the slot 13 substantially in parallel near the inner side surfaces of the slot 13 when viewed in the Z direction (axial direction). As a result, the outer shape of the part of the copper wire that serves as the slot housing portion 31 can be transformed into a desired shape for the disposition in the slot 13.

The cross section forming step (S14) is performed after the bending step (S13). The bending step (S13) is performed by using a die. That is, the cross section forming step (S14) is a step of forming, after the bending step (S13), the cross section of the bent copper wire by die forging (die forming) so that the outer shape of the part to face the inner side surfaces of the slot 13 (the wall portion 11a of the back yoke 11 and the circumferential side surfaces 12a of two teeth 12) conforms to the inner side surfaces of the slot 13. Thus, the bending step (S13) is performed before the internal stress of the copper wire increases (work hardening) due to the compression in the cross section forming step (S14). As a result, it is possible to prevent damage (cracks, etc.) to the copper wire due to the bending step (S13) performed on the copper wire in a state in which the internal stress of the copper wire increases (work-hardened state). Unlike a case where the bending step (S13) is performed after the cross section forming step (S14), annealing for removing the internal stress (work hardening) of the copper wire need not be performed before the bending step (S13). Therefore, it is possible to easily realize a heat treatment step described later (common thermal step (S16) for performing both annealing of the copper wire for removing the internal stress (work hardening) of the segment conductor 30 and baking of the insulation coating 40). By the die forging (die forming), it is possible to easily form the cross section of the bent copper wire so that the outer shape of the part to face the inner side surfaces of the slot 13 (the wall portion 11a of the back yoke 11 and the circumferential side surfaces 12a of two teeth 12) conforms to the inner side surfaces of the slot 13. In the cross section forming step (S14), the cross section of the copper wire is formed by closed die forging.

The cross section forming step (S14) is a step of forming the cross section of the copper wire (cut to the length of the segment conductor 30) so that the sectional shape of a part that serves as one of the pair of slot housing portions 31 (FIG. 5A) differs from the sectional shape of a part that serves as the other of the pair of slot housing portions 31 (FIG. 5B). Specifically, in the cross section forming step (S14), as shown in FIGS. 5A and 5B, the cross section of the copper wire is formed so that the radial width (W11) and the circumferential width (W12) of the cross section of the part that serves as one of the pair of slot housing portions 31 differ from the radial width (W21) and the circumferential width (W22) of the cross section of the part that serves as the other of the pair of slot housing portions 31, respectively. As a result, the cross sections of the parts that serve as one and the other of the pair of slot housing portions 31 to be disposed at different radial positions (lanes) can be formed into the shapes conforming to the inner side surfaces of the slot 13 (the wall portion 11a of the back yoke 11 and the circumferential side surfaces 12a of two teeth 12).

The cross section forming step (S14) is a step of forming the sectional shape of the copper wire (cut to the length of the segment conductor 30) so that the sectional shapes of the slot housing portions 31 (see FIGS. 5A and (b)) differ from the sectional shape of the coil end portion 32 (see FIG. 5C). Specifically, in the cross section forming step (S14), as shown in FIGS. 5A to 5C, the cross section of the copper wire is formed so that the radial widths (W11, W21) and the circumferential widths (W12, W22) of the cross sections of the parts that serve as the pair of slot housing portions 31 differ from the radial width (W31) and the circumferential width (W32) of the cross section of a part that serves as the coil end portion 32, respectively. Therefore, the sectional shape of the copper wire (cut to the length of the segment conductor 30) can be formed so that the cross sections of the parts that serve as the slot housing portions 31 and the cross section of the part that serves as the coil end portion 32 have arbitrary shapes. As a result, the degree of freedom in designing the segment conductor 30 can be improved.

The cross section forming step (S14) is a step of forming the cross section of the copper wire so that the part to face the inner side surfaces of the slot 13 (the wall portion 11a of the back yoke 11 and the circumferential side surfaces 12a of two teeth 12) has the shape conforming to the inner side surfaces and a part to face the slot housing portion 31 adjacent in the B direction (radial direction) has a flat surface 31a (see FIG. 3) orthogonal to the B direction when viewed in the Z direction (axial direction). Specifically, as shown in FIG. 3, in the cross section forming step (S14), the cross sections of the copper wires are formed so that the parts that serve as the slot housing portions 31 adjacent in the B direction (radial direction) have two flat surfaces 31a orthogonal to the B direction when viewed in the Z direction (axial direction). As a result, the plurality of slot housing portions 31 housed in the slot 13 can be disposed in the slot 13 so that the plurality of slot housing portions 31 is in surface contact with each other on the respective flat surfaces 31a. Thus, the space factor of the slot housing portions 31 in the slot 13 can be improved to the extent that no gap is formed between the plurality of slot housing portions 31.

### <Insulation Step>

Next, a coating step for applying the insulation coating 40 to the copper wire (not subjected to the insulation coating process) after the cross section forming is performed in step S15. That is, an insulation step (S15) for performing the insulation coating process on the copper wire after the bending and the cross section forming is performed in step S15. Accordingly, unlike a case where the insulation coating 40 is formed on the copper wire in advance, there is no need to consider thinning of the insulation coating 40 in the cross section forming step (S14). Thus, the thickness of the insulation coating 40 need not be increased more than necessary. That is, the insulation coating process can be performed so that the insulation coating 40 has an optimum thickness (minimum thickness that can secure the insulation property of the coil 20) for the part of the copper wire that serves as the slot housing portion 31 with the outside diameter transformed into the desired shape for the disposition in the slot 13 in the cross section forming step (S14). Therefore, the thickness of the insulation coating 40 does not increase more than necessary. Thus, an increase in the occupation ratio of the insulation coating 40 in the slot 13 can be prevented. As a result, the space factor of the slot housing portion 31 in the slot 13 can be improved. Unlike the case where the copper wire having the insulation coating 40 formed in advance is bent at the part that serves as the coil end portion 32, the insulation coating 40 does not deteriorate. Thus, the insulation property of the coil end portion 32 can be improved. As a result, it is possible to improve the space factor of the slot housing portion in the slot while improving the insulation property of the coil end portion.

The insulation step (S15) is a step of performing the insulation coating process by electrodeposition coating on the copper wire after the cross section forming. Specifically, the copper wire after the cross section forming is immersed in a liquid coating in the insulation step (S15). The liquid coating is a thermosetting resin. The thermosetting resin is, for example, polyimide or polyamideimide. By applying a voltage to the copper wire after the cross section forming that is immersed in the liquid coating, the liquid coating is deposited on the surface of the copper wire after the cross section forming. Then, the insulation coating 40 is formed on the surface of the copper wire after the cross section forming. Thus, it is possible to easily perform the insulation coating process by electrodeposition coating on the copper wire after the cross section forming so that the insulation coating 40 has the optimum thickness.

### <Heat Treatment Step>

Next, a common heat treatment step is performed in step S16 to perform both annealing of the copper wire whose cross section has been formed in the cross section forming step (S14) and baking of the (liquid) insulation coating 40 applied (by electrodeposition coating) to the copper wire in the insulation step (S15). That is, the common heat treatment step (S16) is performed after the cross section forming step (S14) and the insulation step (S15).

The common heat treatment step (S16) is a step of performing heat treatment at a temperature at which the annealing of the copper wire whose cross section has been formed in the cross section forming step (S14) and the baking of the insulation coating 40 applied to the copper wire in the coating step (S 15) can be performed. Specifically, the common heat treatment step (S 16) is a step of performing the heat treatment at an annealing temperature of the copper wire that is higher than a curing temperature at which the thermosetting resin serving as the insulation coating 40 applied to the copper wire in the coating step (S 15) is cured by baking.

Specifically, a general annealing temperature of copper (copper wire) used for the segment conductor 30 is 350°C to 500°C. However, the temperature of 350°C to 500°C is a temperature at which the annealing effect on copper is relatively high. Even below 350°C (for example, 300°C), there is a certain annealing effect on copper. That is, the annealing temperature of copper covers a relatively wider range than the range of 350°C to 500°C. The curing temperature of the thermosetting resin used for the insulation coating 40 is approximately 300°C and approximately 250°C in the case of, for example, polyimide and polyamideimide, respectively. The thermosetting resin such as polyimide or polyamideimide is cured at the curing temperature, but the elastic modulus decreases as the temperature increases above the curing temperature. That is, the thermosetting resin becomes more fragile against bending, stretching, or the like as the temperature increases above the curing temperature. Therefore, in the common heat treatment step (S16), it is preferable to perform the heat treatment at an annealing temperature that is higher than the curing temperature of the thermosetting resin serving as the insulation coating 40 but is not significantly higher than the curing temperature. For example, when polyimide and polyamideimide are used as the thermosetting resin, the heat treatment may be performed in the range of approximately 300°C to approximately 350°C.

### <Coil Disposing Step>

Next, a coil disposing step for disposing, in the stator core 10, the segment conductors 30 (coil 20) formed from the copper wires after the bending step and the cross sectional forming and after the insulation coating process is performed in step S 17. The coil disposing step (S17) is a step of housing the slot housing portions 31 of the segment conductor 30 in the slots 13 of the stator core 10 and disposing the coil end portion 32 of the segment conductor 30 outside the slots 13 of the stator core 10. In the disposing step (S17), the plurality of segment conductors 30 is disposed at predetermined positions in the stator core 10. Thus, it is possible to dispose, in the stator core 10, the coil 20 formed from the copper wires that can prevent the increase in the occupation ratio of the insulation coatings 40 in the slots 13.

### <Segment Conductor Joining Step>

Next, a joining step for joining the segment conductors 30 together is performed in step S18. Specifically, the plurality of segment conductors 30 disposed at the predetermined positions in the stator core 10 in the coil disposing step (S17) is joined together in the segment conductor joining step (S18). Specifically, the end of the slot housing portion 31 in the segment conductor 30 disposed on the Z1 side and the end of the slot housing portion 31 in the segment conductor 30 disposed on the Z2 side are joined together in the slot 13.

### [Second Embodiment]

### (Method for Manufacturing Stator)

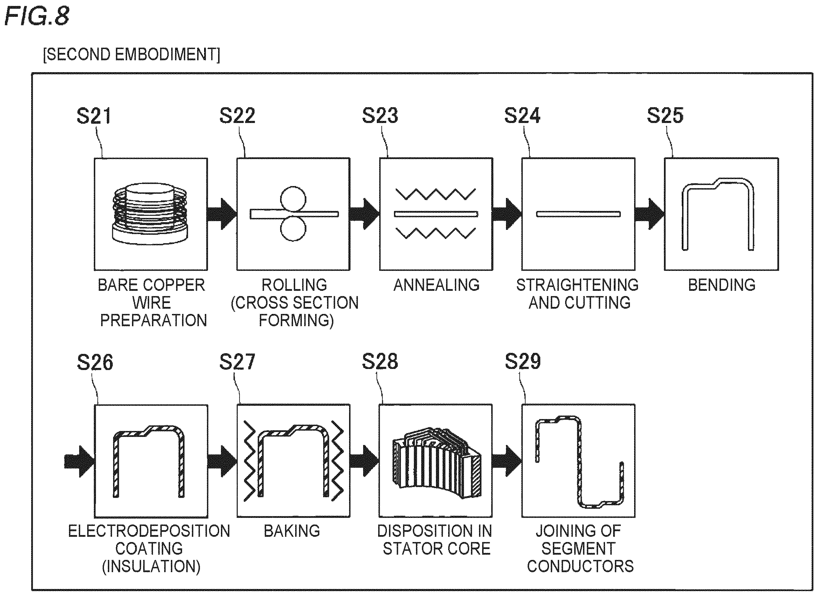

Next, a method for manufacturing the stator 100 according to a second embodiment will be described with reference to FIG. 8. Steps S21, S24, S25, S26, S28, and S29 are substantially the same as steps S11, S12, S13, S15, S17, and S18 in the method for manufacturing the stator 100 in the first embodiment, respectively, and therefore description thereof will be omitted.

### <Rolling Step>

As shown in FIG. 8, a cross section forming step for forming the cross section of a copper wire (bare copper wire having a substantially circular cross section and not subjected to the insulation coating process) to be used as the segment conductor 30 is performed in step S22. The cross section forming step (S22) is a step of transforming the outer shape of a part of the copper wire to be housed in the slot 13 as in the first embodiment. As a result, the outer shape of the copper wire that serves as the slot housing portion 31 can be transformed into a desired shape for the disposition in the slot 13 as in the first embodiment.

The cross section forming step (S22) is performed before the bending step (S25). The cross section forming step (S22) is performed by using a reduction roller. That is, the cross section forming step (S22) is a step of forming, before the bending step (S25), the cross section of the pre-bending copper wire by rolling so that the outer shape of the part to face the inner side surfaces of the slot 13 (the wall portion 11a of the back yoke 11 and the circumferential side surfaces 12a of two teeth 12) conforms to the inner side surfaces of the slot 13. By the rolling, it is possible to easily form the cross section of the part of the copper wire that serves as the slot housing portion 31 so that the outer shape of the part to face the inner side surfaces of the slot 13 (the wall portion 11a of the back yoke 11 and the circumferential side surfaces 12a of two teeth 12) conforms to the inner side surfaces of the slot 13.

### <Annealing Step>

Next, an annealing step for annealing the copper wire after the cross section forming is performed in step S23. That is, the annealing step (S23) is a step of annealing, after the cross section forming step (S22) and before the bending step (S25), the copper wire after the cross section forming and before the bending. By annealing the copper wire after the cross section forming, a residual stress (work hardening) inside the copper wire due to the compression in the cross section forming step (S22) is removed. Thus, it is possible to prevent damage to the copper wire due to the bending step (S25) performed in the work-hardened state of the copper wire after the cross section forming.

### <Baking Step>

A baking step for baking the (liquid) insulation coating 40 applied (by electrodeposition coating) to the bent copper wire is performed in step S27. In the baking step (S27), the (liquid) insulation coating 40 applied (by electrodeposition coating) to the bent copper wire is thermally cured by baking. Thus, the insulation coating 40 is formed on the surface of the bent copper wire.

Other configurations of the method for manufacturing the stator 100 in the second embodiment are the same as those of the method for manufacturing the stator 100 in the first embodiment.

### [Modifications]

The embodiments disclosed herein should be construed as illustrative and not restrictive in all respects. The scope of the present invention is defined by the claims rather than by the above description of the embodiments, and includes all changes (modifications) that fall within the meaning and scope equivalent to the claims.

For example, the first and second embodiments are directed to the example in which the insulation step (S15, S26) is the step of performing the insulation coating process by the electrodeposition coating on the copper wire (coil wire). However, the present invention is not limited to this example. In the present invention, the insulation step may be a step of performing the insulation coating process on the coil wire by a method other than the electrodeposition coating (for example, tape application, extrusion (resin molding), powder coating, spraying, or application).

The first and second embodiments are directed to the example in which the cross section forming step (S14, S22) is the step of forming the cross section of the copper wire (coil wire) so that the part to face the inner side surfaces of the slot 13 has the shape conforming to the inner side surfaces and the part to face the slot housing portion 31 adjacent in the radial direction has the flat surface 31a orthogonal to the radial direction when viewed in the axial direction. However, the present invention is not limited to this example. In the present invention, the cross section forming step may be a step of forming the cross section of the coil wire so that the part to face the inner side surfaces of the slot has the shape conforming to the inner side surfaces and the part to face the slot housing portion adjacent in the radial direction does not have the flat surface.

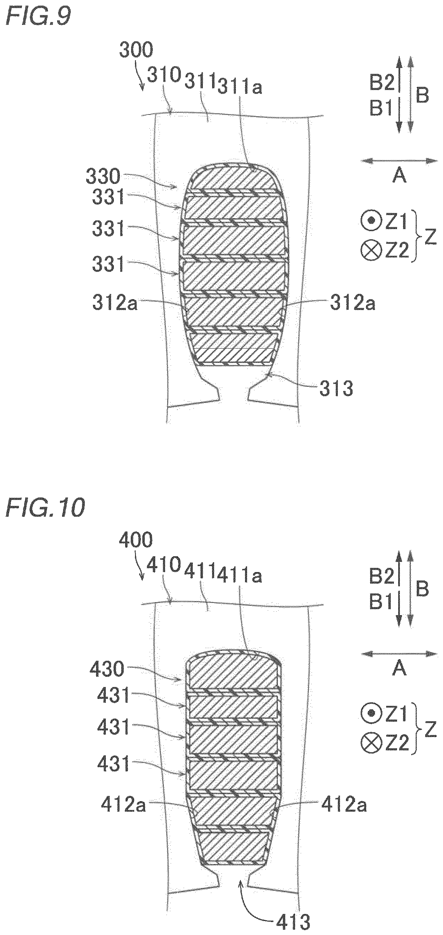

The first and second embodiments are directed to the example in which the sectional shape of the segment conductor 30 is the rectangular shape. However, the present invention is not limited to this example. In the present invention, the sectional shape of a segment conductor 330 (430) may be a shape other than the rectangular shape as in a stator 300 according to a first modification shown in FIG. 9 or a stator 400 according to a second modification shown in FIG. 10. As shown in FIG. 9, in a stator core 310 of the stator 300, the inner side surfaces of a slot 313 (a wall portion 311a of a back yoke 311 and circumferential side surfaces 312a of two teeth 312) have a round shape when viewed in the Z direction (axial direction). The sectional shape of each segment conductor 330 is such that a plurality of slot housing portions 331 arranged in the B direction (radial direction) has shapes conforming to the inner side surfaces of the round slot 313 when viewed in the Z direction (axial direction). As shown in FIG. 10, in a stator core 410 of the stator 400, a wall portion 411a of a back yoke 411 in the inner side surfaces of a slot 413 has a round shape when viewed in the Z direction (axial direction). Circumferential side surfaces 412a of teeth 412 in the inner side surfaces of the slot 413 each have a shape (double-tapered shape) in which two parts having different inclination angles are connected in sequence when viewed in the Z direction (axial direction). The sectional shape of each segment conductor 430 is such that a plurality of slot housing portions 431 arranged in the B direction (radial direction) has shapes conforming to the inner side surfaces of the double-tapered slot 413 when viewed in the Z direction (axial direction).

The first and second embodiments are directed to the example in which the cross section forming step (S14, S22) is the step of forming the cross section of the copper wire (coil wire) so that the sectional shapes of the slot housing portions 31 differ from the sectional shape of the coil end portion 32. However, the present invention is not limited to this example. In the present invention, the cross section forming step may be a step of forming the cross section of the coil wire so that the sectional shapes of the slot housing portions are the same as the sectional shape of the coil end portion.

The first and second embodiments are directed to the example in which the cross section forming step (S14, S22) is the step of forming the cross section of the copper wire (coil wire) so that the sectional shape of the part that serves as one of the pair of slot housing portions 31 differs from the sectional shape of the part that serves as the other of the pair of slot housing portions 31. However, the present invention is not limited to this example. In the present invention, the cross section forming step may be a step of forming the cross section of the coil wire so that the sectional shape of the part that serves as one of the pair of slot housing portions is the same as the sectional shape of the part that serves as the other of the pair of slot housing portions.

The method for manufacturing the stator 100 in the second embodiment is directed to the example in which the annealing step (S23) for annealing the copper wire (coil wire) after the cross section forming and before the bending is provided after the cross section forming step (S22) and before the bending step (S25). However, the present invention is not limited to this example. In the present invention, the annealing step may be omitted in the method for manufacturing the stator in the second embodiment.

The first and second embodiments are directed to the example in which the U-shape bending step and the lane change bending step are performed in sequence. However, the present invention is not limited to this example. In the present invention, the U-shape bending step and the lane change bending step may be performed with any other step (for example, the cross section forming step) interposed therebetween.

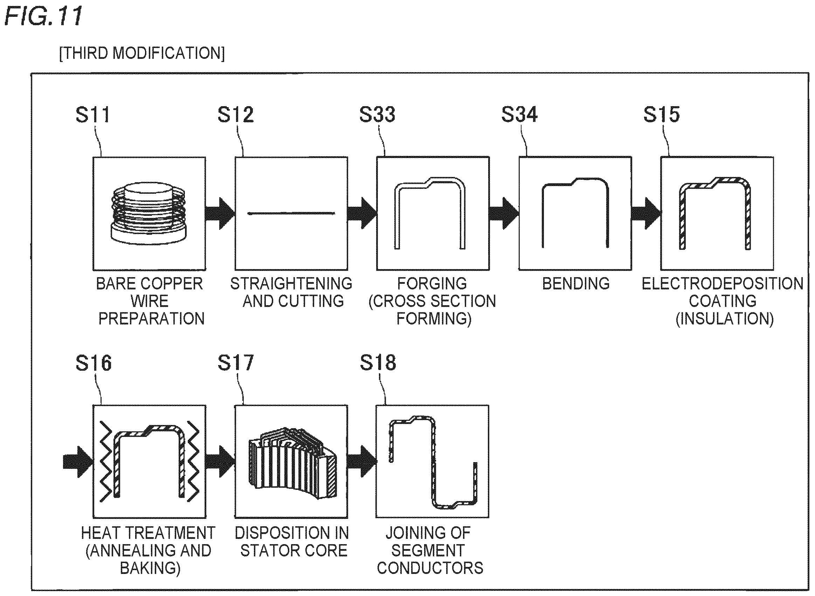

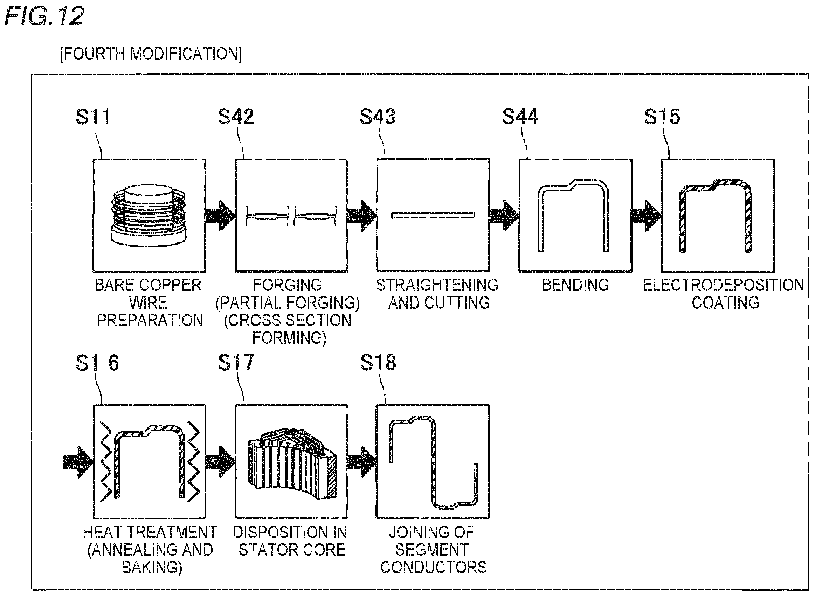

The method for manufacturing the stator 100 in the first embodiment is directed to the example in which the cross section forming step (S14) is performed after the bending step (S13). However, the present invention is not limited to this example. In the present invention, the cross section forming step (S33) may be performed before the bending step (S34) as in a method for manufacturing the stator 100 according to a third modification shown in FIG. 11. In the cross section forming step (S33), the cross section is formed by die forging only for the part of the segment conductor 30 that serves as the slot housing portion 31. In this case, partial die forging is performed in the cross section forming step (S33) unlike the closed die forging in the cross section forming step (S14) of the method for manufacturing the stator 100 in the first embodiment. As in a method for manufacturing the stator 100 according to a fourth modification shown in FIG. 12, the cross section forming step (S42) may be performed before the straightening and cutting step (S42) and the bending step (S44). In the cross section forming step (S42), the cross section is formed by die forging only for the part of the segment conductor 30 that serves as the slot housing portion 31 in the same manner as in the method for manufacturing the stator 100 according to the third modification. Partial die forging is performed in the same manner as in the method for manufacturing the stator 100 according to the third modification.

The method for manufacturing the stator 100 in the first embodiment is directed to the example in which the step of cutting the copper wire (hereinafter referred to as "cutting step") in the straightening and cutting step (S12), the bending step (S13), and the cross section forming step (S14) (forging) are performed in this order. However, the present invention is not limited to this example. In the present invention, the cross section forming step (forging), the cutting step, and the bending step may be performed in this order. In this case, the cross section forming step (forging) is the partial die forging. The cross section forming step (forging), the bending step, and the cutting step may be performed in this order. In this case, the cross section forming step (forging) is the partial die forging. The bending step, the cutting step, and the cross section forming step (forging) may be performed in this order. In this case, the closed die forging is performed. The bending step, the cross section forming step (forging), and the cutting step may be performed in this order. In this case, the closed die forging is performed.

The method for manufacturing the stator 100 in the second embodiment is directed to the example in which the cross section forming step (S22) (rolling), the annealing step (S23), the step of cutting the copper wire (hereinafter referred to as "cutting step") in the straightening and cutting step (S24), and the bending step (S25) are performed in this order. However, the present invention is not limited to this example. In the present invention, the cross section forming step (rolling), the cutting step, the annealing step, and the bending step may be performed in this order. The bending step, the cutting step, and the cross section forming step (rolling) may be performed in this order. In this case, the annealing step is omitted. The cutting step, the bending step, and the cross section forming step (rolling) may be performed in this order. In this case, the annealing step is omitted. The cutting step, the cross section forming step (rolling), the annealing step, and the bending step may be performed in this order.

The above embodiments are directed to the example in which the slot housing portions 31 of the different segment conductors 30 are joined together in the slot 13. However, the present invention is not limited to this example. In the present invention, the slot housing portions of the different segment conductors may be joined together outside the slot.

### Description of the Reference Numerals

10 ... stator core, 11a, 311a, 411a ... wall portion (of back yoke) (inner side surface of slot), 12a, 312a, 412a ... circumferential side surface (of tooth) (inner side surface of slot), 13, 312, 412 ... slot, 20 ... coil, 30, 330, 430 ... segment conductor, 31, 331, 431 ... slot housing portion, 31a ... flat surface, 32 ... coil end portion, 40 ... insulation coating, 100, 300, 400 ... stator

## Claims

1. A method for manufacturing a coil to be disposed in a stator including slots, the method comprising:
a bending step for bending a coil wire that is not subjected to an insulation coating process so that the coil wire is disposed in the stator;
a cross section forming step for transforming an outer shape of a part to be housed in the slot in the coil wire that has a circular cross section and is not subjected to the insulation coating process; and
an insulation step for performing, after the bending step and the cross section forming step, the insulation coating process on the coil wire after bending and cross section forming.

2. The method for manufacturing the coil according to claim 1, wherein the cross section forming step is a step of forming the cross section of the coil wire so that an outer shape of a part to face inner side surfaces of the slot conforms to the inner side surfaces of the slot.

3. The method for manufacturing the coil according to claim 2, wherein the cross section forming step is a step of forming, after the bending step, the cross section of the coil wire after the bending by die forging so that the outer shape of the part to face the inner side surfaces of the slot conforms to the inner side surfaces of the slot.

4. The method for manufacturing the coil according to claim 2, wherein the cross section forming step is a step of forming, before the bending step, the cross section of the coil wire before the bending by rolling so that the outer shape of the part to face the inner side surfaces of the slot conforms to the inner side surfaces of the slot.

5. The method for manufacturing the coil according to claim 4, further comprising an annealing step for annealing, after the cross section forming step and before the bending step, the coil wire after the cross section forming and before the bending.

6. The method for manufacturing the coil according to any one of claims 1 to 5, wherein
the coil includes a pair of slot housing portions to be housed in the slots different from each other, and
the cross section forming step is a step of forming the cross section of the coil wire so that a sectional shape of a part that serves as one of the pair of slot housing portions differs from a sectional shape of a part that serves as the other of the pair of slot housing portions.

7. The method for manufacturing the coil according to any one of claims 1 to 6, wherein
the coil includes a segment conductor including a pair of slot housing portions to be housed in the slots different from each other, and a coil end portion connecting the pair of slot housing portions, and
the cross section forming step is a step of forming the cross section of the coil wire so that sectional shapes of parts that serve as the slot housing portions differ from a sectional shape of a part that serves as the coil end portion.

8. The method for manufacturing the coil according to any one of claims 1 to 7, wherein
the coil includes a plurality of slot housing portions to be housed in the slots so as to be arranged in a radial direction of the stator, and
the cross section forming step is a step of forming the cross section of the coil wire so that a part to face inner side surfaces of the slot has a shape conforming to the inner side surfaces and a part to face the slot housing portion adjacent in the radial direction has a flat surface orthogonal to the radial direction when viewed in an axial direction of the stator.

9. The method for manufacturing the coil according to any one of claims 1 to 8, wherein
the coil includes a segment conductor including a pair of slot housing portions to be housed in the slots different from each other, and a coil end portion connecting the pair of slot housing portions, and
the method further includes a cutting step for cutting the coil wire to a length of the segment conductor before the insulation step.

10. The method for manufacturing the coil according to any one of claims 1 to 9, wherein the insulation step is a step of performing the insulation coating process by electrodeposition coating on the coil wire after the cross section forming.

11. A method for manufacturing a stator including a stator core including slots and a coil disposed in the stator, the method comprising:
a bending step for bending a coil wire that is not subjected to an insulation coating process so that the coil wire is disposed in the stator core;
a cross section forming step for transforming an outer shape of a part to be housed in the slot in the coil wire that has a circular cross section and is not subjected to the insulation coating process;
an insulation step for performing, after the bending step and the cross section forming step, the insulation coating process on the coil wire after bending and cross section forming; and
a coil disposing step for disposing, after the insulation step, in the stator core, the coil formed from the coil wire after the bending, the cross section forming, and the insulation coating process.
